# FASCICULE DE BREVET EUROPEEN

(11) **EP 3 231 069 B1**
(45) Date de publication et mention de la délivrance du brevet: **24.04.2019**
(21) Numéro de dépôt: 15820564.1
(22) Date de dépôt: 07.12.2015
(51) Int. Cl.: H02K 11/33, H02K 11/02, H02K 5/22, B60K 1/00, H02K 7/00

(54) **ARCHITECTURE COMPACTE DE GROUPE MOTOPROPULSEUR ÉLECTRIQUE POUR VÉHICULE AUTOMOBILE**
ANTRIEBSSTRANG EINES ELEKTROKRAFTFAHRZEUGES MIT KOMPAKTER BAUWEISE
COMPACT ARCHITECTURE OF A MOTOR VEHICLE ELECTRIC DRIVE TRAIN

(30) Priorité: 08.12.2014 FR 1462053
(43) Date de publication de la demande: 18.10.2017
(73) Titulaire: Renault S.A.S., 92100 Boulogne-Billancourt (FR)
(72) Inventeur: MEUNIER, Fabrice, 92100 Boulogne Billancourt (FR); DUVAL, Hervé, 78400 Chatou (FR); DUBOIS, Philippe E., 78320 Le Mesnil Saint Denis (FR); OUDART, Rémi, 78084 Guyancourt Cedex (FR)
(86) Numéro de dépôt international: PCT/FR2015/053341
(87) Numéro de publication internationale: WO 2016/092187

(56) Documents cités:
- EP-A1- 1 523 087
- EP-A1- 2 607 707
- DE-A1-102011 016 624
- US-A- 6 022 048
- US-A1- 2007 273 223
- US-A1- 2011 163 705
- US-A1- 2012 286 605
- US-A1- 2014 306 563

## Description

L'invention a pour objet les groupes motopropulseurs et plus particulièrement les groupes motopropulseurs de véhicules à motorisation électrique. De tels groupes motopropulseurs comprennent généralement un moteur électrique disposé dans un carter dédié, et relié à un système d'électronique de puissance permettant généralement d'alimenter le moteur en courant alternatif à partir d'une batterie d'accumulation électrique, dite batterie de traction. Le système d'électronique de puissance comprend généralement un onduleur permettant de convertir le courant continu de la batterie en courant alternatif et inversement de convertir en courant continu permettant de recharger la batterie un courant alternatif provenant du moteur fonctionnant alors en génératrice. Le système d'électronique de puissance comprend éventuellement un chargeur redresseur permettant de convertir en courant continu un courant alternatif provenant d'un réseau extérieur d'alimentation électrique, pour recharger la batterie. Le chargeur redresseur peut au besoin faire transiter le courant à redresser à partir du réseau extérieur par certains des bobinages du moteur. Il peut également reprendre tout ou partie des composants de l'onduleur. Le brevet FR2943188 décrit une architecture d'un tel chargeur.

L'agencement des carters du moteur et du ou des carters abritant l'électronique de puissance se fait généralement en superposant par-dessus le premier carter dédié au moteur, un carter dédié à l'onduleur, un autre carter dédié au chargeur et, dans certains cas, un autre carter abritant un filtre électrique. Le filtre électrique est un système permettant d'adapter la puissance réactive de l'ensemble lorsque l'on branche le groupe motopropulseur sur le réseau électrique extérieur afin de recharger la batterie. Le réseau extérieur alimente typiquement une borne de recharge électrique et alimente également d'autres types d'installations électriques. Le filtre et ses connexions avec le dispositif d'électronique de puissance représentent cependant une part conséquente du volume du GMP (Groupe MotoPropulseur). La multiplicité de carters nécessite en outre de multiples dispositifs d'étanchéité entre les différents carters et impose d'aménager des zones d'usinage qui augmentent le volume global de l'ensemble, d'autant plus que l'on vient généralement assembler des carters de forme sensiblement parallélépipédiques sur une face cylindrique du carter du moteur

Cette disposition par empilement et superposition par-dessus un carter cylindrique impose de rajouter au carter cylindrique de la matière pour effectuer les zones d'attache. Ces zones d'attache peuvent se révéler fragiles si on opte pour un ajout de matière réduit. On alourdit le véhicule si on opte pour des attaches permettant de résister à certains essais de crash. La multiplicité des carters ne facilite pas les opérations d'entretien du véhicule, et il faut parfois démonter davantage plusieurs carters pour atteindre celui contenant l'élément à remplacer. L'invention a pour but de proposer un agencement des différents carters permettant de réduire l'encombrement global du groupe motopropulseur, permettant de limiter le nombre de zones d'assemblage et d'étanchéité entre carters. L'invention a également pour but d'améliorer la résistance structurelle du groupe motopropulseur et de faciliter les opérations d'assemblage et/ou de maintenance.

Le document US2012286605 décrit un carter pour groupe motopropulseur électrique destiné à faciliter le découplage entre le moteur et les éléments électroniques qui le pilotent. Le boîtier électronique et le boîtier moteur présentent des sections cylindriques similaires s'emboîtant l'un dans l'autre.

Le document US2007273223 décrit un carter de moteur électrique permettant de disposer radialement autour du moteur, des capacités associées au moteur, afin de réduire l'encombrement axial de l'ensemble.

Le document US6022048 décrit un système de carter préassemblé comprenant un carter cylindrique de moteur électrique, qui est localement encerclé par une armature support parallélépipédique à une de ses extrémités pour faciliter la mise en place du moteur dans le véhicule.

Le document US2011163705 décrit un carter de moteur électrique intégrant latéralement dans deux directions parallèles à son axe de rotation, des compartiments destinés à recevoir des onduleurs de puissance.

Le document US2014306563 décrit un carter de moteur électrique sur lequel est disposé, dans une direction parallèle à son axe de rotation, un carter d'électronique de puissance.

Le document DE 102011016624 décrit un groupe motopropulseur électrique comportant un carter moteur, sur lequel est fixé, dans une direction parallèle à son axe de rotation, un carter hébergeant l'onduleur de traction. Un autre carter intégrant un chargeur est disposé dans la même direction que le carter de l'onduleur, longitudinalement par rapport au moteur électrique.

Le document EP1523087 décrit un moteur électrique dont l'électronique de puissance est située dans un carter coiffant axialement le moteur électrique.

Le document EP2607707 décrit une pompe centrifuge dans laquelle des éléments d'électronique sont fixés en porte à faux par rapport à la direction longitudinale du moteur.

A cette fin, l'invention propose un groupe motopropulseur électrique pour véhicule automobile, comprenant au moins
- un moteur électrique
- un système d'électronique de puissance comportant un onduleur et un chargeur redresseur,
- un premier carter contenant le système d'électronique de puissance
- un second carter distinct du premier carter et contenant le moteur, le premier carter comportant un fond et une ouverture d'accès au système d'électronique de puissance, ladite ouverture faisant face audit fond, le premier et le second carter étant configurés pour être assemblés de manière à venir en butée l'un contre l'autre suivant une direction d'accostage parallèle à l'axe de rotation du moteur, le second carter étant en appui sur une paroi extérieure du fond du premier carter, l'ouverture du premier carter se trouvant à l'opposé du second carter,
ledit groupe motopropulseur étant caractérisé en ce qu'il comprend en outre un troisième carter distinct du premier carter et du second carter, le troisième carter étant assemblé sur le premier carter et contenant un système électrique de filtre connecté en amont du chargeur redresseur, le premier carter comprenant une plate-forme qui est en porte à faux par rapport à au moins une portion du premier carter et sur une face de laquelle est défini un contour d'assemblage du troisième carter sur le premier carter, ledit contour étant compris dans un plan d'assemblage sensiblement parallèle à la direction axiale du moteur, ladite plate-forme surplombant ledit second carter, et en ce que des zones d'assemblage entre le premier carter et le second carter sont dimensionnées de manière à ce que les deux carters assemblés forment une structure autoporteuse pouvant être soulevée par l'un ou par l'autre carter.

Le premier carter comporte un fond et une ouverture d'accès au système d'électronique de puissance, et le second carter est en appui sur une paroi extérieure du fond du premier carter, dont l'ouverture se trouve à l'opposé du second carter. L'appui du second carter sur le premier carter peut se faire par pièces, par exemple par pièces d'étanchéité interposées, ces pièces n'étant cependant pas des carters au sens de carénages creux contenant des sous ensembles électriques ou mécanique.

Le système d'électronique de puissance peut typiquement comprendre un onduleur configuré pour alimenter le moteur en courant électrique alternatif à partir d'une batterie d'accumulation électrique, et comprendre un redresseur de courant. De manière préférentielle, l'onduleur et le redresseur sont tous deux disposés dans le premier carter. Par "électronique de puissance", on entend plus généralement un système comprenant des composants électriques et des composants électroniques et par lequel transitent des courants de plusieurs ampères, généralement des courants supérieurs à la dizaine d'ampères, en vue de modifier les caractéristiques de ces courants pour alimenter des appareils électriques. L'ouverture fait face au fond du carter sur lequel sont fixés les composants du système d'électronique de puissance, par exemple sur lequel sont fixés un onduleur et/ou un redresseur de courant, ou au moins une partie de l'onduleur et/ou du redresseur, par exemple une capacité associée à l'onduleur ou au redresseur.

Le premier et le second carter sont donc configurés pour être assemblés de manière à venir en butée l'un contre l'autre suivant une première direction d'accostage, qui est sensiblement parallèle à une direction permettant d'extraire l'onduleur et le redresseur du premier carter. Cette première direction d'accostage peut être la direction axiale du moteur, parallèle à l'axe de rotation du moteur. Le second carter vient en butée sur une paroi extérieure du fond du premier carter.

Selon un mode de réalisation préféré, les zones d'assemblage entre le premier et le second carter sont dimensionnées de manière à ce que les deux carters assemblés forment une structure autoporteuse pouvant être soulevée par l'un ou par l'autre carter. On entend par zones d'assemblage entre le premier et le second carter, les zones du premier ou du second carter permettant d'assembler ces carters entre eux. Avantageusement, au moins un point de fixation du groupe motopropulseur sur le véhicule est prévu sur le premier carter et au moins un point de fixation du groupe motopropulseur sur le véhicule est prévu sur le second carter.

Avantageusement, le groupe motopropulseur comprend en outre un système électrique de filtre, et comprend un troisième carter distinct du premier et du second carter, contenant le filtre et assemblé sur le premier carter. Le système électrique de filtre est typiquement connecté an amont du chargeur redresseur du système d'électronique de puissance. Le système électrique de filtre est par exemple un système électrique configuré pour limiter la puissance réactive de la batterie en recharge, et permettre de recharger la batterie d'alimentation électrique à partir d'un réseau d'alimentation extérieur au véhicule délivrant un courant alternatif. De manière préférentielle, le troisième carter est assemblé sur le premier carter de manière à pouvoir être supporté statiquement par le seul premier carter, indépendamment du second carter. Par statiquement, on entend du point de vue d'un équilibre statique ne prenant éventuellement pas en compte des phénomènes de vibrations. Des liaisons indirectes entre second et troisième carter peuvent être prévues, par exemple à l'aide d'au moins une pièce reliée simultanément au troisième et au second carter, et permettant de changer les modes vibratoires de l'assemblage des trois carters, donc du groupe motopropulseur. De manière préférentielle, il n'y a pas de contact direct entre le troisième carter et le second carter. Le troisième carter peut ainsi aisément être manipulé comme élément d'un sous ensemble regroupant le premier et le second carter. L'ouverture du premier carter peut être avantageusement fermée par un couvercle, le couvercle étant de préférence sensiblement perpendiculaire à la direction axiale du moteur. Le couvercle est de préférence indépendant du second carter et du troisième carter.

Selon un mode de réalisation avantageux, le troisième carter présente une face supérieure et une ouverture inférieure, le troisième carter étant assemblé de manière à venir plaquer le contour de l'ouverture inférieure contre un contour d'assemblage dédié ménagé sur le premier carter. Le volume compris dans le troisième carter est donc fermé par une surface du premier carter. On désigne ici par face supérieure une face qui se trouve à l'opposé de l'ouverture désignée par ouverture inférieure. Dans les configurations où la face et l'ouverture sont à l'opposé l'une de l'autre, on peut envisager des variantes de réalisations dans lesquelles la face supérieure ne serait pas horizontale, ni ne se trouverait en partie haute par rapport au troisième carter, et/ou ne se trouverait en partie haute par rapport à l'assemblage des trois carters.

Selon un mode de réalisation préféré, le contour d'assemblage du troisième carter est sensiblement parallèle à la direction axiale du moteur. On entend par là que ce contour est parallèle à 10% près à un plan géométrique contenant une direction géométrique parallèle à l'axe de rotation du moteur

Autrement dit, le troisième carter est assemblé sur le premier carter de manière à venir en butée sur le premier carter suivant une seconde direction d'accostage qui est sensiblement perpendiculaire à la première direction d'accostage, c'est-à-dire perpendiculaire à 10% près à la direction axiale du moteur. La seconde direction d'accostage peut être par exemple la direction verticale si l'axe de rotation du moteur est placé à l'horizontale.

Avantageusement, une fois assemblés, le troisième carter et le premier carter présentent un recouvrement axial selon cette seconde direction d'accostage, c'est-à-dire qu'au moins une portion du premier carter et au moins une portion du troisième carter ont des coordonnées communes selon l'axe correspondant à la seconde direction d'accostage. De manière préférentielle, le troisième carter est assemblé sur le premier carter de manière à ce qu'une portion du premier carter s'interpose entre le troisième carter et le second carter. Le troisième carter est alors assemblé suivant une direction d'assemblage qui tend à rapprocher le troisième carter de la position assemblée du second carter. Selon une autre variante de réalisation, le troisième carter est assemblé sur le premier carter de manière à interposer le troisième carter entre le premier carter et le second carter. Le troisième carter est alors assemblé suivant une direction d'assemblage qui tend à rapprocher le troisième carter de la position assemblée du second carter.

Selon un mode de réalisation particulièrement avantageux, le premier carter comprend une plate forme qui est en porte à faux par rapport à au moins une portion du premier carter. Un contour d'assemblage du troisième carter sur le premier carter peut être défini sur une face de la plate forme. De manière préférentielle, le troisième carter surplombe ainsi le second carter. De manière préférentielle, la plate forme s'étend à la fois suivant une direction parallèle à la première direction d'accostage et suivant une autre direction perpendiculaire à la fois à la première direction d'accostage et à la seconde direction d'accostage. De manière préférentielle; la plate forme s'interpose entre la quasi-totalité de la surface projetée du troisième carter visible à partir du second carter, et le second carter. Par quasi-totalité on entend plus de 70% de la surface projetée.

Selon un mode de réalisation préféré, la plate forme comporte une portion de forme sensiblement rectangulaire, le plus petit côté du rectangle étant parallèle à la direction axiale du moteur. Lorsque les dimensions du filtre le permettent, on limite ainsi l'étendue de la distance en porte à faux de la plate forme, qui peut être dimensionnée pour supporter un effort moindre le long de sa ligne d'encastrement, que si la distance en porte à faux était plus importante.

Selon un mode de réalisation préférentiel, le premier carter comprend une pièce monobloc définissant au moins un logement accessible par l'ouverture et limité par le fond du carter. Cette pièce monobloc définit également la plate-forme destinée à l'assemblage du troisième carter. Selon un mode de réalisation préféré, la pièce monobloc peut être réalisée en métal, par exemple par des techniques de fonderies. La pièce monobloc sert alors à la fois de pièce de structure et assure un effet d'écran par rapport aux émissions électromagnétiques des composants électroniques qu'elle contient. On peut envisager des variantes de réalisations dans lesquelles la pièce monobloc serait réalisée par exemple en matière plastique résistant à des températures élevées, par exemple recouvertes d'une couche conductrice pour assurer l'effet d'écran électromagnétique.

La plate-forme peut présenter, vue en section perpendiculairement à la première direction d'accostage -autrement dit vue en section perpendiculairement au plan moyen de la plate forme, au moins localement un profil de poutre creuse ou un profil de poutre en U. De manière préférentielle, l'ouverture du ou des profils en U est tournée vers le troisième carter, de manière à ce que, une fois le troisième carter assemblé sur la plate forme, la plate-forme se comporte en flexion comme une poutre creuse à section fermée.

De manière avantageuse, les connexions électriques entre les éléments contenus dans au moins un premier des deux carters et au moins un deuxième des deux carters se font au moyen de connecteurs dont une première partie est solidaire du premier des deux carters et dont une deuxième partie est solidaire du deuxième des deux carters. Ainsi ces connexions électriques ne nécessitent pas de câble extérieur au premier ou au second carter, tous les conducteurs électriques étant contenus dans le premier des deux carters ou dans le deuxième des deux carters. Selon un mode de réalisation, au moins une partie des conducteurs intérieurs aux carters sont réalisés sous forme rigide et sont solidaires du carter qui les contient. Selon un mode de réalisation préféré, les seules connexions électriques entre les trois carters se font par un premier groupe de connecteurs rigides solidaires pour partie du premier carter et pour partie du troisième carter, et un second groupe de connecteurs rigides solidaires pour partie du premier carter et pour partie du second carter.

Le premier carter peut comprendre des canaux aptes à une circulation de fluide, ménagés sur une face du premier carter mitoyenne du second carter. La circulation de fluide peut être utilisée pour le refroidissement du carter.

Le premier carter comprend :
- un logement comportant un fond et une ouverture, l'ouverture étant entourée par un rebord sur lequel peut être assemblé un couvercle s'étendant sensiblement suivant un premier plan géométrique,
- au moins une première zone d'accostage permettant, sur une face extérieure au logement, de mettre en appui et de fixer un second carter,
- une plateforme d'assemblage sensiblement perpendiculaire au premier plan géométrique et sensiblement perpendiculaire à la première zone d'accostage, surplombant un volume disponible face à la première zone d'accostage ou surplombant un second carter assemblé sur la première zone d'accostage. De manière préférentielle, le logement présente des dimensions permettant d'accueillir au moins un onduleur et/ou au moins un redresseur de courant électrique. Le logement peut en outre comporter des connexions électriques intégrées et adaptées pour accueillir l'onduleur et le redresseur. La zone d'accostage peut être une zone sensiblement plane, ou une zone configurée pour recevoir un couvercle plan sur lequel le second carter peut venir en appui.

De manière préférentielle, la zone d'accostage comporte une ou plusieurs zones planes.

Pour que la plate forme puisse être perpendiculaire à la fois au couvercle et à la zone plane d'accostage, il faut bien sûr que le couvercle et la zone plane d'accostage présentent une direction (une direction de droite parallèle à une même droite géométrique) commune. De manière préférentielle, le plan du couvercle est parallèle au plan moyen de la première zone plane d'accostage. On peut cependant envisager des variantes de réalisation dans lesquelles le plan du couvercle est perpendiculaire au plan moyen de la première zone plane d'accostage, la plate forme surplombant une portion d'espace faisant face à la zone d'accostage. L'intérieur du premier carter peut être alors accessible latéralement par rapport à une direction axiale du moteur. Par direction moyenne de la première zone plane d'accostage, on entend la direction de plan perpendiculaire à la direction d'accostage d'un second carter qui serait de forme adaptée pour être assemblé sur le premier carter. De manière préférentielle, la première zone plane d'accostage est entièrement comprise dans un même plan géométrique. On peut cependant envisager d'autres variantes de réalisation, par exemple la première zone plane d'accostage peut comprendre plusieurs portions de plans parallèles, ou peut comprendre plusieurs portions de plans inclinées dans les directions opposées par rapport à la direction d'accostage du second carter.

De manière préférentielle, la plate forme comprend au moins une seconde zone plane d'accostage permettant de mettre en appui et de fixer un troisième carter sur une des faces de la plate forme. De manière avantageuse, la plate forme comporte une portion en forme de cuvette, la seconde zone plane d'accostage entourant la cuvette, de manière à permettre de venir mettre en appui et fixer un troisième carter sur les rebords de la cuvette. La cuvette forme de fait une poutre de section en u, encastrée à une de ses extrémités.

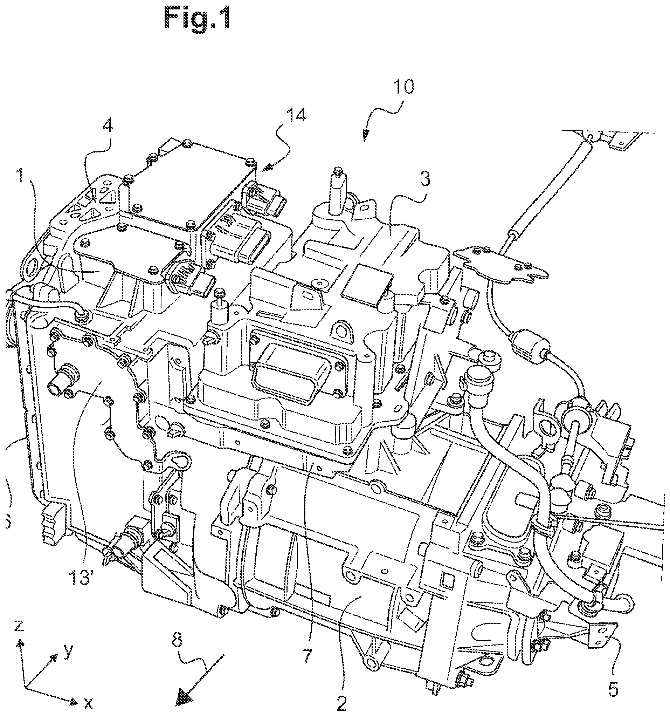

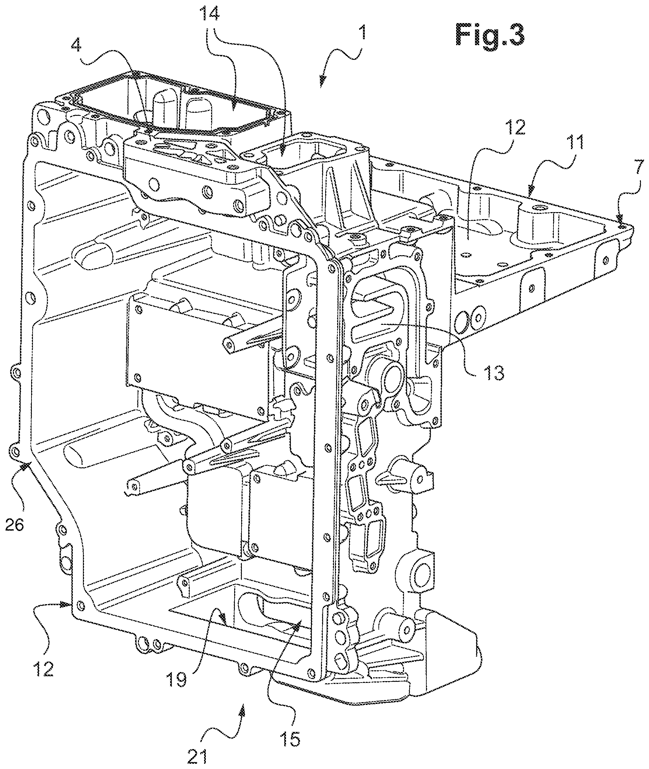

Quelques buts de caractéristique et avantages de l'invention paraîtront à la lecture de la description suivante, donnés uniquement à titre d'exemples non limitatifs et faites en référence aux dessins annexés, sur lesquels :
La figure 1 est une vue d'ensemble en perspective d'un groupe motopropulseur selon l'invention
La figure 2 est une vue éclatée d'une partie des éléments du groupe motopropulseur de la figure 1
La figure 3 est une vue en perspective d'un élément du groupe motopropulseur de la figure 1 suivant un angle de vue différent de celui de la figure 1.
Tel qu'illustré sur la figure 1, un groupe motopropulseur 10 comprend un système d'électronique de puissance contenu dans un logement principal 20 d'un premier carter 1, comprend un moteur électrique relié mécaniquement aux roues du véhicules et logé dans un second carter 2, et comprend également un système de filtre électrique logé dans un troisième carter 3. Le système d'électronique de puissance, le filtre électrique et le moteur ne sont pas directement visibles sur les figures. Sur les figures, les orientations du groupe motopropulseur sont repérés par rapport à des axes x, y, z, où y est la direction longitudinale ou direction d'avancement du véhicule, x est la direction transversale du véhicule, et z est la direction verticale. L'axe du moteur est disposé suivant la direction transversale x. Les termes horizontal, vertical, s'entendent ici en référence à l'orientation du moteur, que l'on suppose positionné comme il l'est dans le véhicule, avec son axe de rotation parallèle à la direction x transversale du véhicule. Le premier et le second carter sont assemblés de manière à venir en contact l'un contre l'autre le long d'une paroi extérieure 8 d'un fond 21 du logement principal 20 du premier carter.
Cette paroi extérieure 8 est orientée suivant un plan d'assemblage sensiblement parallèle au plan géométrique défini par les axes y, z. Le couvercle 6 du premier carter 1 recouvre une ouverture 25 orientée axialement à l'opposé du fond 21 du premier carter 1. Le couvercle 6 vient en appui sur un rebord 26 de l'ouverture 25 (visible sur la figure 3).
Le couvercle 6 du premier carter 1 est également disposé suivant un plan sensiblement parallèle à un plan géométrique y, z, c'est à dire parallèle à la paroi 8 du fond 21 du premier carter sur lequel le second carter vient en butée. Lorsque les trois carters occupent leur position finale assemblée sur le véhicule , la direction x correspond donc à la fois à la direction suivant laquelle on pourrait extraire le moteur de son carter, à la direction d'assemblage du second carter sur le premier carter et à la direction suivant laquelle on pourrait extraire les différents composants du système électronique de puissance hors du carter 1, tout cela sous réserve que le premier et le second carter se trouvent momentanément isolés respectivement de son couvercle et du premier carter, tout en occupant la même orientation dans l'espace. En pratique pour accéder aux éléments d'électronique de puissance contenus dans le premier carter, on peut faire pivoter l'axe du groupe motopropulseur pour rapprocher l'axe du moteur de la verticale. Le second carter peut avoir une forme sensiblement cylindrique d'axe x. Le premier carter peut présenter une face 8 d'assemblage servant à la fois de butée d'assemblage au second carter et de couvercle au second carter. Cette face 8 peut être parallèle au couvercle 6 du premier carter. Une fois assemblés, le premier et le second carter forment une structure autoporteuse , ce qui permet de fixer le groupe motopropulseur 10 sur le véhicule par des points d'attache répartis pour partie sur le premier carter - par exemple par un point d'attache 4 en partie supérieure du premier carter- et pour partie sur un carter réducteur 28 lui-même assemblé à l'autre extrémité axiale du carter moteur 2 -par exemple à l'aide d'au moins un point d'attache 5 situé vers l'extrémité axiale du carter réducteur-. Selon un mode de réalisation avantageux, le premier carter comporte une plateforme 7 qui surplombe le second carter et sur laquelle est assemblé le troisième carter 3 comprenant le filtre électrique. Le filtre électrique est ainsi contenu dans un volume délimité en partie inférieure par la plateforme 7 et délimité en partie supérieure par le troisième carter 3. Le troisième carter 3 vient se refermer sur une face supérieure de la plateforme le long d'un contour de fermeture 24 compris dans un plan 11 d'assemblage qui est sensiblement horizontal. Le troisième carter 3 présente une face supérieure 22 et une ouverture inférieure 23. Le troisième carter 3 est assemblé de manière à venir plaquer un contour de l'ouverture inférieure 23 contre un contour 24 d'assemblage dédié ménagé sur le premier carter 1. Selon un mode de réalisation préféré, la plateforme 7 est séparée du second carter par une distance verticale non nulle (distance suivant la direction perpendiculaire à la plateforme), ce qui facilite les manoeuvres d'assemblage du second carter sur le premier carter. La largeur de la plateforme suivant la direction transversale y, est sensiblement égale à la largeur totale suivant cet axe, du logement principal 20 dans lequel sont contenus les éléments d'électroniques de puissance, et en particulier dans lequel sont contenus un onduleur et/ou un redresseur de courant associés au moteur. Par largeur totale on entend la largeur cumulée du logement et des parois qui le définissent. Le premier carter 1 peut comprendre, outre le logement principal 20, des logements secondaires qui sont accessibles par exemple par la partie supérieure du carter 1. Des éléments électriques ou électroniques autres que l'onduleur et le redresseur peuvent ainsi être insérés dans ces logements secondaires 14 suivant une direction d'insertion verticale. Ces logements secondaires peuvent être fermés par des couvercles dédiés distincts du couvercle 6 du logement principal. Dans des configurations connues distinctes de l'invention, de manière classique l'onduleur comme le redresseur sont généralement connectés chacun à un système capacitif de dimensions non négligeables, et sont chacun installés dans un carter dédié avec leur système capacitif associé. Dans les modes de réalisation selon l'invention proposés sur les figures 1 à 3, le premier carter 1 comporte un logement principal 20 accessible par le couvercle 6, et dont les dimensions permettent de loger à la fois l'onduleur, le redresseur de courant et leurs capacités associées, ainsi qu'un convertisseur courant-continu courant-continu. La largeur transversale du premier carter est supérieure ou égale à la largeur transversale du carter 2 du moteur, et la dimension suivant l'axe z du logement est supérieure au diamètre du carter du moteur, de manière à pouvoir à la fois loger l'onduleur et le redresseur et à pouvoir soutenir la plateforme 7 à distance du carter 2 du moteur. Dans cette configuration, le contenu de chacun des carters peut être inspecté séparément, en ne démontant que le carter concerné ou en ne démontant que son couvercle. Il n'est plus nécessaire de fixer des carters sur la face cylindrique du carter moteur. Ce qui conduit généralement à des compromis difficiles entre un alourdissement du carter moteur -pour venir chercher les points de fixation du carter supplémentaire à assembler- et une fragilité de l'ensemble -si le carter supplémentaire est assemblé sur des supports dimensionnés a minima-. La configuration de groupe motopropulseur selon l'invention permet donc à la fois de faciliter l'assemblage du groupe motopropulseur, de faciliter la maintenance de chacun des composants, moteur, électronique de puissance, filtre, et permet d'obtenir une structure auto porteuse présentant une bonne résistance en cas de choc du véhicule au niveau du moteur.

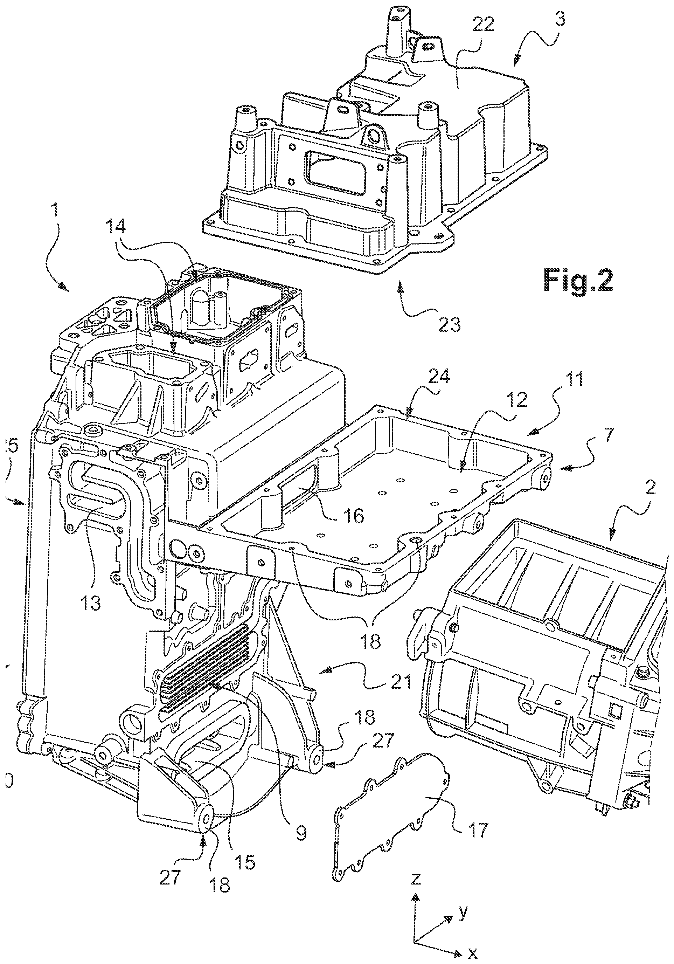

La figure 2 illustre, sous une forme éclatée, le premier carter, le second carter, et le troisième carter dans leur orientation d'assemblage final dans le véhicule. On retrouve sur la figure 2 des éléments communs à la figure 1, les mêmes éléments étant désignés par les mêmes références. On peut noter sur la figure 2 la présence de circuits de refroidissement 9 et 13 ménagés dans les parois extérieures du premier carter 1. Le circuit de refroidissement 13 est ménagé dans une paroi qui reste libre suite à l'assemblage du premier, du second et du troisième carter ensemble. Le circuit 13 est fermé par un couvercle 13' visible sur la figure 1. Le circuit 9 est fermé par un couvercle 17 visible sur la figure 2. Le circuit de refroidissement 9 se trouve sur l'extérieur de la paroi 8 du fond 21 du premier carter, au niveau de la face d'accostage entre le premier et le second carter. Ce circuit 9 est fermé par une plaque de fermeture 17 et se trouve ainsi intercalé entre le premier et le second carter. Dans l'exemple illustré, l'assemblage du troisième carter et du second carter sur le premier carter se fait au moyen de vis qui viennent s'accrocher dans des trous filetés 18 disposés sur le pourtour des logements définis par le troisième carter et par le second carter. Les méplats usinés 27 entourant les trous filetés 18 du premier carter permettant de fixer le second carter sur le premier carter forment des zones planes d'accostage du second carter sur le premier carter. Dans certaines configurations, on peut également considérer la paroi 8 de fond du premier carter, une fois recouverte par le couvercle 17, comme une autre zone plane d'accostage du second carter sur le premier carter, c'est-à-dire une zone plane par laquelle le second carter vient en butée sur le premier carter. On peut envisager des variantes de réalisation dans lesquelles les zones d'accostages du second carter sur le premier carter ne sont pas planes. Le second carter peut par exemple venir en appui sur le premier carter par des zones d'accostage qui sont situées latéralement de part et d'autre du premier carter, et/ou par des zones d'accostages courbes.

On note également sur le premier carter, des orifices formant un premier passage de câbles 15 et un second passage de câbles 16. Le premier passage de câbles 15 est disposé sur la face d'appui du premier carter sur laquelle vient s'appuyer le second carter. Cette face d'appui correspond ici au fond 21 du premier carter. On peut cependant envisager des variantes de réalisation dans lesquelles le second carter vient s'appuyer non sur le fond, mais sur une paroi latérale du premier carter, auquel cas le passage de connecteur correspondant sera ménagé sur cette même paroi latérale. Le second passage de câbles 16 est disposé sur la face du premier carter supportant la plateforme 7. Dans l'exemple illustré, le passage de câbles 16 est disposé à l'intérieur d'un évidement 12 ménagé dans la plateforme 7. Cet évidement 12 contribue à définir le volume disponible pour le filtre électrique protégé par le carter 3. On peut envisager des variantes de réalisation dans lesquelles le passage de câbles 16 se trouve sur la même face du premier carter que celle qui supporte la plateforme 7, sans être directement intégré à l'intérieur de la plateforme 7. Les passages de câbles 15 et 16 peuvent être dimensionnés de manière à pouvoir y fixer respectivement un élément de connecteur complémentaire d'un élément de connecteur assemblé respectivement sur le second ou le troisième carter. Les éléments de connecteur pouvant être configurés pour assurer les liaisons électriques entre les deux carters par le simple enclenchement de deux éléments de connecteurs. L'évidement 12 de la plateforme permet de donner à la plate forme, dans le plan y z, une forme de poutre creuse de section en u. On obtient ainsi une bonne rigidité de la plateforme sans alourdir excessivement le premier carter. Une fois le troisième carter 3 assemblé sur la plateforme, on obtient une poutre creuse de section fermée, encastrée par la base de la plateforme et qui permet de soutenir efficacement le filtre contenu dans le carter tout en limitant le poids global de l'ensemble du groupe motopropulseur.

L'invention ne se limite pas aux exemples de réalisation décrits et peut se décliner en de nombreuses variantes. On peut envisager un premier carter contenant l'onduleur et le redresseur et qui ne comporte pas de logements annexes 14 en partie supérieure. On peut envisager une plateforme qui au lieu d'être interposée entre le carter 3 et le moteur viendrait soutenir un carter 3 qui viendrait s'interposer entre la plateforme et le moteur. On peut envisager des variantes de réalisation ne présentant pas de canaux de refroidissement sur la face libre extérieure du carter 1 ou ne présentant pas de canaux de refroidissement sur la face 1 mitoyenne entre le carter 1 et le carter 2. On peut envisager des variantes de réalisation dans lesquelles seul un des deux éléments d'électronique de puissance serait logé derrière le couvercle vertical 6 du carter 1, l'autre élément d'électronique de puissance étant logé dans un logement 14 accessible par le haut du carter 1. La plateforme peut être arrimée par son extrémité par une pièce rapportée (non représentée), par exemple une plaque reliant l'extrémité de la plate forme et le second carter, afin de limiter les amplitudes de vibration de la plate forme pendant le roulage du véhicule. Le premier carter peut comprendre d'autres ouvertures que celles faisant face au fond, par exemple le passage 15 de câbles entre le premier et le second carter, et/ou une ouverture inférieure 19 autorisant un accès à l'onduleur par le dessous du véhicule.

L'agencement de carters selon l'invention permet de faciliter l'accès à chaque composant du groupe motopropulseur, d'assurer un meilleur compromis entre résistance structurelle de l'ensemble, notamment au choc, et masse de l'ensemble, et de raccourcir les longueurs d'éléments de connexion reliant les éléments électriques ou électroniques d'un carter à ceux du carter voisin.

## Revendications

1. Groupe motopropulseur (10) électrique pour véhicule automobile, comprenant au moins
- un moteur électrique
- un système d'électronique de puissance comportant un onduleur et un chargeur redresseur,
- un premier carter (1) contenant le système d'électronique de puissance
- un second carter (2) distinct du premier carter (1) et contenant le moteur,
le premier carter (1) comportant un fond (21) et une ouverture (25) d'accès au système d'électronique de puissance, ladite ouverture faisant face audit fond, le premier et le second carter étant configurés pour être assemblés de manière à venir en butée l'un contre l'autre suivant une direction d'accostage parallèle à l'axe de rotation du moteur, le second carter (2) étant en appui sur une paroi extérieure du fond (21) du premier carter (1), l'ouverture (25) du premier carter (1) se trouvant à l'opposé du second carter (2),
ledit groupe motopropulseur étant **caractérisé en ce qu'**il comprend en outre un troisième carter (3) distinct du premier carter (1) et du second carter (2), le troisième carter (3) étant assemblé sur le premier carter (1) et contenant un système électrique de filtre connecté en amont du chargeur redresseur, le premier carter (1) comprenant une plate-forme (7) qui est en porte à faux par rapport à au moins une portion du premier carter (1) et sur une face de laquelle est défini un contour d'assemblage (24) du troisième carter sur le premier carter (1), ledit contour étant compris dans un plan d'assemblage sensiblement parallèle à la direction axiale (x) du moteur, ladite plate-forme surplombant ledit second carter, et **en ce que** des zones d'assemblage entre le premier carter (1) et le second carter (2) sont dimensionnées de manière à ce que les deux carters assemblés forment une structure autoporteuse pouvant être soulevée par l'un ou par l'autre carter.

2. Groupe motopropulseur selon la revendication précédente, dans lequel le troisième carter (3) présente une face supérieure (22) et une ouverture inférieure (23), le troisième carter (3) étant assemblé de manière à venir plaquer un contour de l'ouverture inférieure (23) contre ledit contour (24) d'assemblage ménagé sur le premier carter (1).

3. Groupe motopropulseur selon l'une quelconque des revendications précédentes, dans lequel le premier carter (1) comprend une pièce monobloc définissant au moins un logement (20) accessible par l'ouverture (25) et limité par le fond (21) du carter, la pièce monobloc définissant également la plate-forme (7) destinée à l'assemblage du troisième carter (3).

4. Groupe motopropulseur selon l'une quelconque des revendications précédentes, dans lequel la plate-forme (7) présente, vue en section perpendiculairement au plan moyen (xy) de la plate-forme, au moins localement un profil de poutre creuse ou un profil de poutre en U.

5. Groupe motopropulseur selon l'une quelconque des revendications précédentes, dans lequel le premier carter (1) comprend des canaux (9) aptes à une circulation de fluide, ménagés sur une face (8) du premier carter mitoyenne du second carter (2).

## Patentansprüche

1. Elektrischer Antriebsstrang (10) für ein Kraftfahrzeug, welcher wenigstens umfasst:
- einen Elektromotor,
- ein Leistungselektroniksystem, das einen Wechselrichter und einen Ladegleichrichter aufweist,
- ein erstes Gehäuse (1), welches das Leistungselektroniksystem enthält,
- ein zweites Gehäuse (2), welches vom ersten Gehäuse (1) verschieden ist und den Motor enthält, wobei das erste Gehäuse (1) einen Boden (21) und eine Öffnung (25) für den Zugang zum Leistungselektroniksystem aufweist, wobei die Öffnung dem Boden zugewandt ist, wobei das erste und das zweite Gehäuse dafür ausgebildet sind, so zusammengebaut zu werden, dass sie entlang einer Anlegerichtung aneinander zur Anlage kommen, die parallel zur Drehachse des Motors ist, wobei sich das zweite Gehäuse (2) an einer Außenwand des Bodens (21) des ersten Gehäuses (1) abstützt, wobei sich die Öffnung (25) des ersten Gehäuses (1) gegenüber dem zweiten Gehäuse (2) befindet,
wobei der Antriebsstrang **dadurch gekennzeichnet ist, dass** er außerdem ein drittes Gehäuse (3) umfasst, das vom ersten Gehäuse (1) und vom zweiten Gehäuse (2) verschieden ist, wobei das dritte Gehäuse (3) auf dem ersten Gehäuse (1) angebaut ist und ein elektrisches Filtersystem enthält, das dem Ladegleichrichter vorgeschaltet ist, wobei das erste Gehäuse (1) eine Plattform (7) umfasst, welche in Bezug auf wenigstens einen Abschnitt des ersten Gehäuses (1) auskragend ist und bei der auf einer Seite eine Kontur zur Montage (24) des dritten Gehäuses auf dem ersten Gehäuse (1) definiert ist, wobei diese Kontur in einer Montageebene enthalten ist, die im Wesentlichen parallel zur axialen Richtung (x) des Motors ist, wobei die Plattform das zweite Gehäuse überkragt, und dadurch, dass Montagebereiche zwischen dem ersten Gehäuse (1) und dem zweiten Gehäuse (2) so bemessen sind, dass die zwei zusammengebauten Gehäuse eine selbsttragende Struktur bilden, die an dem einen oder an dem anderen Gehäuse angehoben werden kann.

2. Antriebsstrang nach dem vorhergehenden Anspruch, wobei das dritte Gehäuse (3) eine Oberseite (22) und eine untere Öffnung (23) aufweist, wobei das dritte Gehäuse (3) so montiert ist, dass eine Kontur der unteren Öffnung (23) an die Montagekontur (24) angedrückt wird, die auf dem ersten Gehäuse (1) ausgebildet ist.

3. Antriebsstrang nach einem der vorhergehenden Ansprüche, wobei das erste Gehäuse (1) ein einstückiges Teil umfasst, das wenigstens eine Aufnahme (20) definiert, die über die Öffnung (25) zugänglich ist und durch den Boden (21) des Gehäuses begrenzt wird, wobei das einstückige Teil auch die Plattform (7) definiert, die für die Montage des dritten Gehäuses (3) bestimmt ist.

4. Antriebsstrang nach einem der vorhergehenden Ansprüche, wobei die Plattform (7), in einem zur Mittelebene (xy) der Plattform senkrechten Schnitt betrachtet, wenigstens lokal ein Hohlträgerprofil oder ein U-Trägerprofil aufweist.

5. Antriebsstrang nach einem der vorhergehenden Ansprüche, wobei das erste Gehäuse (1) für eine Zirkulation von Fluid geeignete Kanäle (9) umfasst, die auf einer Seite (8) des ersten Gehäuses ausgebildet sind, die dieses mit dem zweiten Gehäuse (2) gemeinsam hat.

## Claims

1. Electric power train (10) for automotive vehicle, comprising at least:
- an electric motor,
- a power electronics system comprising an inverter and a charging rectifier,
- a first casing (1) containing the power electronics system,
- a second casing (2) distinct from the first casing (1) and containing the motor,
the first casing (1) comprising a bottom (21) and an opening (25) for access to the power electronics system, said opening facing said bottom, the first and second casings being configured to be assembled in such a way as to butt against one another in a direction of abutment parallel to the axis of rotation of the motor, the second casing (2) bearing on an exterior wall of the bottom (21) of the first casing (1), the opening (25) of the first casing (1) lying opposite the second casing (2),
said power train being **characterized in that** it furthermore comprises a third casing (3) distinct from the first casing (1) and from the second casing (2), the third casing (3) being assembled on the first casing (1) and containing an electric filtering system connected upstream of the charging rectifier, the first casing (1) comprising a platform (7), which juts out relative to at least one portion of the first casing (1) and on a face of which platform a contour (24) for assembling the third casing on the first casing (1) is defined, said contour being comprised in an assembly plane which is substantially parallel to the axial direction (x) of the motor, said platform overhanging said second casing, and **in that** assembly areas between the first casing (1) and the second casing (2) are dimensioned so that the two assembled casings form a self-supporting structure able to be lifted by one casing or the other.

2. Power train according to the preceding claim, wherein the third casing (3) has an upper face (22) and a lower opening (23), the third casing (3) being assembled so as to press a contour of the lower opening (23) against said assembly contour (24) located on the first casing (1).

3. Power train according to either one of the preceding claims, wherein the first casing (1) comprises a one-piece part defining at least one housing (20) accessible through the opening (25) and limited by the bottom (21) of the casing, the one-piece part also defining the platform (7) intended for assembling the third casing (3).

4. Power train according to any one of the preceding claims, wherein the platform (7), seen in cross-section perpendicular to the mean plane (xy) of the platform, has at least locally a hollow beam profile or a U-shaped beam profile.

5. Power train according to any one of the preceding claims, wherein the first casing (1) comprises channels (9) capable of circulating fluid, located on a face (8) of the first casing common with the second casing (2).
